# EUROPEAN PATENT APPLICATION

(11) **EP 0 559 889 A1**
(43) Date of publication of application: **15.09.1993**
(21) Application number: 85901084.5
(22) Date of filing: 28.02.1985
(51) Int. Cl.: A63F 9/22

(54) **TELEVISION GAME MACHINE**

(71) Applicant: TAITO CORPORATION, Chiyoda-Ku, Tokyo 102 (JP)
(72) Inventor: KADOTA, Otomatsu Kabushiki Kaisha Taito, Tokyo 102 (JP); KUWABARA, Osamu Kabushiki Kaisha Taito, Tokyo 102 (JP)
(74) Representative: Hayward, Denis Edward Peter
(86) International application number: JP8500100
(87) International publication number: WO8605112

(57) **Abstract**

The game machine has two display units, and one image-synthesizing half-mirror. One display unit is adapted to display images of a background and an object which are not controlled directly by a player, and the other an image including an image of an object which can be controlled to a predetermined extent by a player. The half-mirror is adapted to reflect the image formed on one display unit, and produce a mirror image thereof at the front side or rear side of an image on the other display unit. The player sees the image appearing on the latter display unit as well as the minor image of the image on the former display unit. Since the above image and mirror image are spaced at a suitable distance, a three-dimensional view can be obtained. One display unit or the half-mirror is, in some cases, supported so that it can be moved in a suitable direction.

## Description

### TECHNICAL FIELD

The present invention relates to a gaming machine using a video display device and, more particularly, to a television gaming machine of the cockpit type or upright type which is suitable for airfight game, submarine game, pursuit game, and other games, etc.

### BACKGROUND ART

Video display devices in which a video signal stored in a proper medium is reproduced and an image is displayed on the screen of a cathode ray tube are well known and widespread.

In such a kind of conventional video display devices, for example, in the case of an airfight game, images of ground scenery or the like which have preliminarily recorded in a recording medium such as a video disc, video tape, laser disc, or the like are sequentially displayed on the screen, and at the same time the images of the enemy airplanes and friend airplanes which are outputted from a control unit including a CPU are displayed on the same screen.

These video display devices are constituted in a manner such that the moving speeds of the ground scenery and the like displayed on the screen are increased by depressing the pedal of the gaming machine by the player and the position of the airplane of the player himself is controlled by a joy stick or control lever.

However, there is a problem such that a three dimensional feeling lacks and the player soon loses interest as the moving speeds of the ground scenery and the like displayed on the screen merely increase in association with the depression of the pedal and at the same time only the position of the airplane of the player himself displayed on the same screen as that of the ground scenery changes when the player operates the control lever as mentioned above.

### DISCLOSURE OF INVENTION

It is an object of the present invention to provide a television gaming machine having an extremely high value in a commodity market, in which three dimensional display is derived, and an interest of the person who plays the game can be further enlarged.

Namely, as for the airfight game as an example, it is intended to provide a television gaming machine in which the player's airplane is seen as if it were actually flying at high altitude and at the same time the ground scenery is also displayed as the reduced or enlarged image in association with the ascent or descent of the airplane as necessary so that the airplane of the player himself is seen as if it were three-dimensionally moving.

It is the gist of the present invention that the invention relates to a television gaming machine comprising a controller for a game which is operated by the player, a central processing unit having a memory in which data or the like necessary for the game are stored for generating a video signal required for displaying the progressive state of the game, in response to an output of the controller and in accordance with a predetermined program, and a display device for displaying the image indicative of the progressive state of the game in response to the video signal generated from the central processing unit, whereby the game is constituted on the basis of the relative relationship among the image elements in the displayed image whose positions can be controlled within a constant range by the player through the controller in accordance with the rule of the game and the image elements which cannot be directly controlled other than those controllable image elements, wherein this television gaming machine is equipped with a first display device for displaying the video image including the image elements which can be directly controlled by the controller; a second display device for displaying the video image which does not include the image elements which can be directly controlled by the controller; and a half mirror which is arranged between the first and second display devices and allows the virtual image of the video image displayed on the screen of either one of those display devices to be produced at a location near the other display device, thereby synthesizing and displaying both of those video images.

In the television gaming machine according to the present invention constituted as described above, for example, the video image which cannot be directly controlled by the player, such as the ground scenery, enemy ground facilities or the like is displayed on the second display device. The video image including the video image elements which can be directly controlled within a constant range, such as the video image including, e.g., airplanes and other objects is displayed in the first display device on the basis of the function of the controller which is operated by the player.

The player sees not only the video image such as the ground scenery or the like displayed in the second display device through the half mirror but also the virtual image produced by reflecting the video image such as the airplane or the like displayed in the first display device by way of the half mirror.

In this manner, the virtual image of the on the screen of the first display device is produced at a forward or backward position away from the screen of the second display device by a proper distance, e.g., about ten centimeters, so that a three dimensional feeling is given to the player.

### BRIEF DESCRIPTION OF DRAWINGS

Fig. 1 is a cross sectional view showing a mechanical construction of one embodiment of a television gaming machine according to the present invention;
Fig. 2 is a diagram of the electronic circuit of the same;
Fig. 3 is an explanatory diagram showing the principle of the invention;
Fig. 4 is an explanatory diagram showing one example of the video image such as the ground scenery or the like displayed on the screen of the second display device;
Fig. 5 is an explanatory diagram showing one example of the video image including the image elements which are displayed on the screen of the first display device and are directly controlled by the controller; and
Fig. 6 is an explanatory diagram showing the state in that the video images displayed on the screens of the first and second display devices were synthesized by the half mirror.

### BEST MODE FOR CARRYING OUT THE INVENTION

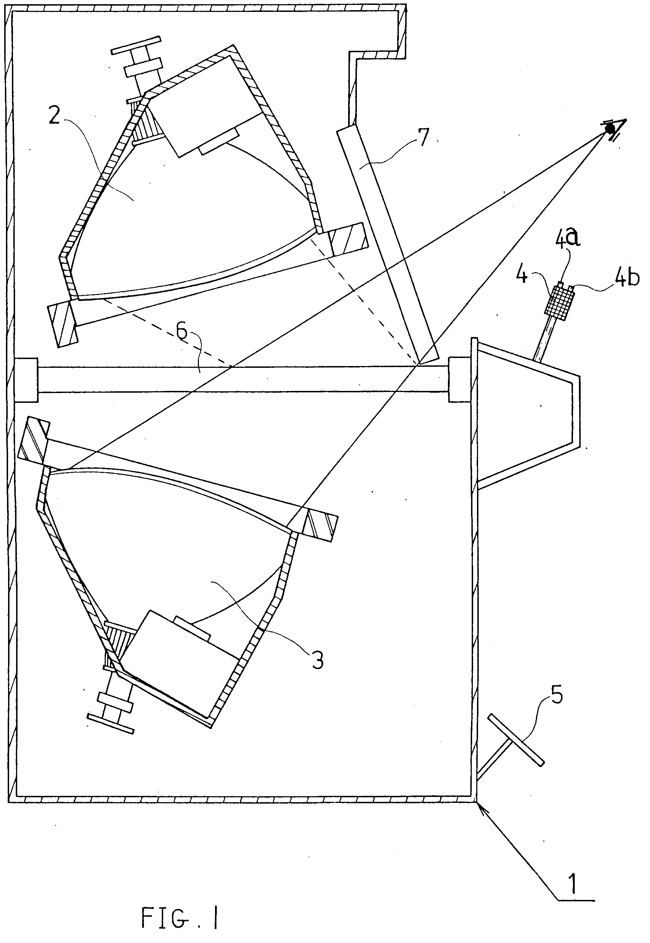

In Figs. 1 to 5, reference numeral 1 denotes a gaming machine of the upright type; 2 is the first cathode ray tube display device for displaying a video image including image elements which are directly controlled by a controller 4; 3 the second cathode ray tube display device for displaying a ground scenery 3a and other video images; 4a and 4b are control buttons provided for the controller 4; 5 is a pedal; 6 a half mirror; and 7 a transparent glass.

The video image including image elements 2a which can be directly controlled by the player within a constant range by way of the controller 4 in accordance with the rule of a game is displayed on the first cathode ray tube 2. The video image which cannot be directly controlled by at least the player, such as the ground scenery 3a or the like is displayed on the second cathode ray tube 3 by way of a well-known means.

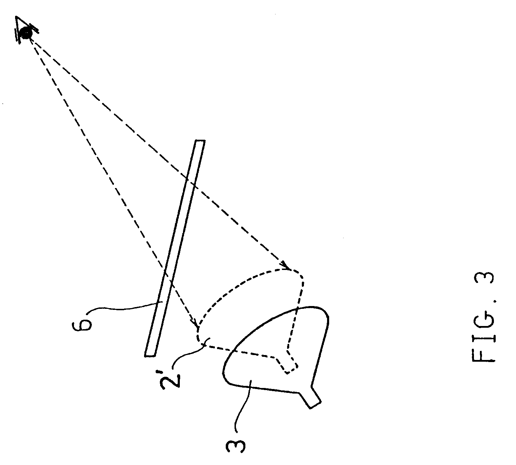

As shown in Fig. 3, in this embodiment, a virtual image 2' of the screen image of the first cathode ray tube 2 produced by the half mirror 6 is appeared at a forward position away from the screen of the second cathode ray tube 3 by a few centimeters, so that a three-dimensional feeling is given to the player.

In other words, the virtual image 2' displays the video image such as the ground scenery 3a or the like displayed in the second cathode ray tube 3, namely, at a position which is closer to the player, so that a three dimensional flying feeling is obtained.

This three dimensional feeling is exaggerated by displaying the ground scenery or the like after enlarging and reducing it in accordance with the descending and ascending operations of the airplane.

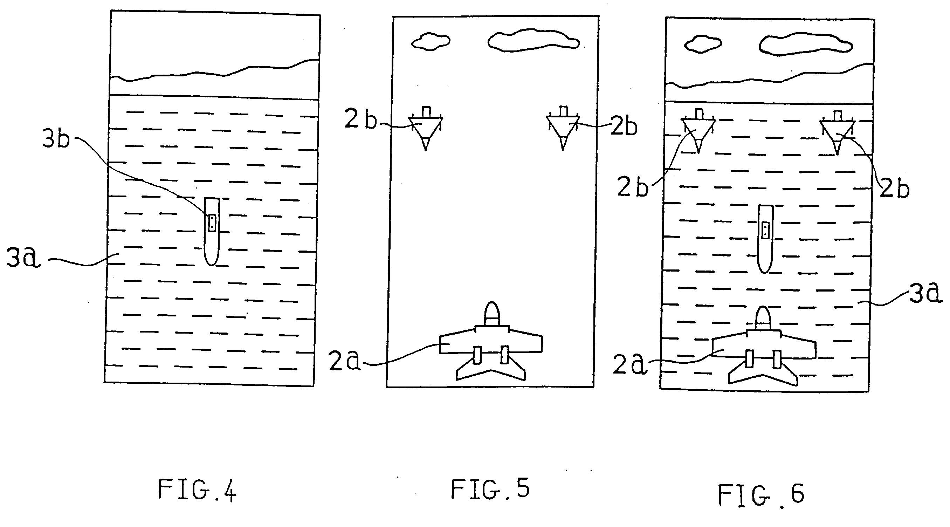

As shown in Fig. 4, for example, a ground or sea scenery 3a and an enemy ship 3b, and a ground base and other attack facilities (not shown) are displayed on the screen of the second cathode ray tube 3. A friend airplane 2a, enemy airplanes 2b, other various kinds of obstacles, clouds, and the like are displayed on the screen of the first cathode ray tube 2, for example, as shown in Fig. 5.

When the player depresses the control button 4a of the controller 4, a missile is launched from the airplane 2a of the player himself. This missile is displayed in the first cathode ray tube 2 together with the friend and enemy airplanes 2a and 2b.

On one hand, when the player depresses the other control button 4b, a bomb is dropped toward the ground target from the airplane 2a of the player himself. This bomb is displayed in the second cathode ray tube 3 and becomes gradually small in dependence on the drop.

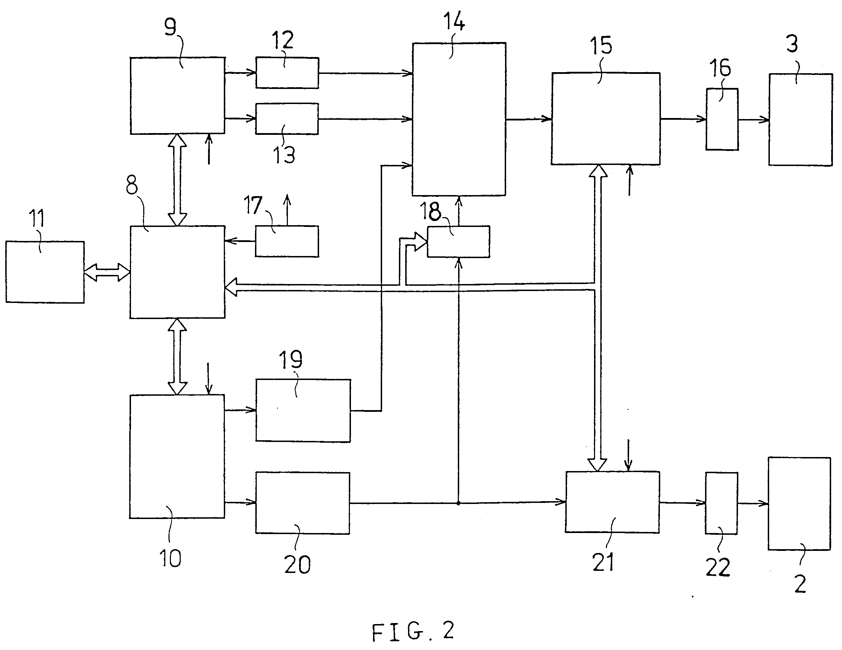

In Fig. 2, reference numeral 8 denotes a CPU (Central Processing Unit); 9 a screen circuit in which the data for displaying the background image and other images necessary for the game in the second display device 3, and the like are recorded; 10 an object circuit in which data necessary for displaying various object images in the first cathode ray tube 2 is recorded; 11 an I/O circuit included in the controller which is operated by the player; 12 a shift register for the background image elements; 13 a shift register for the image elements such as, for example, titles of games, scores, etc., other than the background image; 14 a priority circuit; 15 and 16 a color code converting circuit and a video signal output circuit for the cathode ray tube 3; 17 a clock pulse generator; 18 a gate circuit; 19 a buffer register for an image signal to display a desired object, e.g., an enemy ship or the like on the screen of the cathode ray tube 3; 20 a buffer register for an image signal to display a desired object, e.g., an airplane of tile player himself or the like in the cathode ray tube 2; and 21 and 22a color code converting circuit and a video signal out put circuit for the cathode ray tube 2.

The CPU 8 controls the whole development of the game and serves to take out the data required for the game from the screen circuit 9 and object circuit 10 in response to an input from the I/O circuit 11 in accordance with a predetermined program, thereby allowing desired images to be displayed in the first and second cathode ray tubes 2 and 3.

For instance, as shown in Fig. 4 mentioned above, the data to display the background image and scores necessary for the game are recorded in the screen circuit 9. These data are properly outputted in response to a command from the CPU 8 and transmitted to the priority circuit 14 through the shift registers 12 and 13, respectively.

On the other hand, the buffer register 19 serves to display the object in the second cathode ray tube 3. An output of the register 19 is sent to the priority circuit 14. The object is, for instance, the enemy ship 3b shown in Fig. 4.

The data of the object which can be directly controlled by the player through the I/O circuit 11 is read out from the object circuit 10 in accordance with a command of the CPU 8 and transmitted to the color code converting circuit 21 through the buffer register 20. This data is converted to a color signal by way of a well-known manner and then converted to a video signal by the video signal output circuit 22. This video signal is sent to the first cathode ray tube 2, so that the image as mentioned above is displayed.

The output of the buffer register 20, on the other hand, is sent to the priority circuit 14 through the gate circuit 18 and used to produce the shadow of the airplane 2a of the player himself on the second cathode ray tube 3 as necessary.

To display a desired image on the second cathode ray tube 3, the priority circuit 14 selects each of the above-mentioned inputs in accordance with a predetermined priority and supplies the output to the second cathode ray tube 3 through the video signal output circuit 16, thereby producing the image as mentioned above.

Since the present invention is constituted as described above, according to the invention, a video image with a high degree of reality can be displayed and an interest of the person who plays the game can be further raised. Thus, a television gaming machine with a high value of commodity can be provided.

The present invention is not limited to the foregoing embodiment. Namely, for example, although the airfight game has been shown in this embodiment, the invention can be applied to a space war game, submarine game, or any other games similar to them.

In the case of the submarine game, on one hand, if the scenery in the sea as the background in displayed in the first cathode ray tube and the submarine of the player himself and enemy submarines whose positions or the like can be controlled by the operation of the controller by the player are displayed in the second cathode ray tube, the video image is displayed on the half mirror as if the submarines were moving in the sea.

On the other hand, either the first or second cathode ray tube may be supported so as to be movable along the direction of its central axis or of the eyes of the player which is playing the game, namely, the straight line connecting the center of the screen of the second cathode ray tube 3 and the eyes of the player, or along the direction of the light which is generated from the center of the screen of the first cathode ray tube 2 and reflected by the half mirror and enters the eyes of the player. This cathode ray tube may be also constituted so as to be moved forward and backward in dependence on the development of the game. Or, the half mirror itself may be movably supported and these components may be constituted so as to be moved forward and backward in accordance with the development of the game. With such a constitution, the video image with a higher degree of reality can be displayed.

In addition to the above-mentioned image, in dependence on the feature of the game, an object which is different from or identical to the object that was used in the first display device and that can be directly controlled by the player may be also displayed in the second display device. Further, the structure of the half mirror is not necessarily limited to the half-plated silver mirror but a transparent plate member may be used. Moreover, the angle of inclination of the half mirror, method of progressing the game, controller, forms and attaching positions and the like of the control buttons and pedal and the like can be freely designed and changed within the purview of the objects of the present invention.

The purview of the present invention, therefore, has to be judged on the basis of only the scope of claim set forth hereinbelow.

### INDUSTRIAL APPLICABILITY

The television gaming machine according to the present invention can be mainly used as a kind of gaming machines which are installed in game centers or play grounds. However, by making such a machine small-sized, it can be also used as a television gaming machine which can be played inside the house.

## Claims

1. A television gaming machine comprising a controller for a game which is operated by a player, a central processing unit having a memory in which data necessary for the game is stored for generating a video signal required for displaying the progressive state of the game in response to an output of said controller and in accordance with a predetermined program, and a video monitor for displaying an image indicative of the progressive state of the game in response to the video signal generated from said central processing unit, whereby the game is constituted on the basis of the relative relationship among image elements in the displayed image whose positions can be controlled within a constant range by the player through said controller in accordance with a rule of the game and image elements other than said image elements which can be directly controlled by said player, characterized by comprising : a first display device for displaying a video image including the image elements which can be directly controlled by said controller; a second display device for displaying a video image of the image elements other than said image elements which can be directly controlled by the controller, a background and the like; and a half mirror which is arranged between said first and second display devices and allows the virtual image of the video image displayed in either one of said first and second display devices to be produced at a location near the screen of the other display device and at the same time allows the video image displayed in said other display device to be transmitted, and thereby three dimensionally synthesizing and displaying both of said video images.

2. A television gaming machine according to claim 1, wherein the virtual image of the video image of said one of the display devices which is produced by way of said half mirror is produced at a position in parallel with the video image of the other display device.

3. A television gaming machine according to claim 1, wherein the virtual image of the video image of said one of the display devices which is produced by way of said half mirror is produced at a position which is slanted for the video image of the other display device.

4. A television gaming machine according to any one of claims 1 to 3, wherein at least one of said display devices is supported so as to be movable along the central axis thereof and is moved forward and backward in accordance with the development of the game.

5. A television gaming machine according to any one of claims 1 to 3, wherein at least one of said display devices is supported so as to be movable along the straight line connecting the center of the screen of said display device and the eyes of the player and is moved forward and backward in accordance with the development of the game.

6. A television gaming machine according to any one of claims 1 to 3, wherein at least one of said display devices is supported so as to be movable along the light which is generated from the center of the screen of said display device and reflected by said half mirror and reaches the eyes of the player, and said one of the display devices is moved forward and backward in accordance with the development of the game.

7. A television gaming machine according to any one of claims 1 to 6, wherein said half mirror is movably supported and moved forward and backward in accordance with the development of the game.

8. A television gaming machine according to any one of claims 1 to 7, wherein said display devices are cathode ray tube display devices.
